# EUROPEAN PATENT APPLICATION

(11) **EP 2 902 949 A2**
(43) Date of publication of application: **05.08.2015**
(21) Application number: 13788431.8
(22) Date of filing: 11.07.2013
(51) Int. Cl.: G06Q 10/06

(54) **DEVICE MANAGEMENT SYSTEM AND METHOD**

(30) Priority: 02.11.2012 CN 201210433259
(71) Applicant: ZTE Corporation, Shenzhen, Guangdong 518057 (CN)
(72) Inventor: SUN, Kaijiang, Shenzhen Guangdong 518057 (CN)
(74) Representative: Benson, Christopher
(86) International application number: PCT/CN2013/079235
(87) International publication number: WO 2013/167029

(57) **Abstract**

Provided is a device management system and method. The system includes an information collection module, a core processing module and a management module; the information collection module detects in real time one or more operations of a user, generates operation information of the user based on detected operations of the user, and transmits the operation information of the user to the core processing module; the core processing module parses and concludes the operation information of the user as small models, combines certain small modules to a big model representing a habitual behavior of the user and stores the big model; when a current location and time match those stored in the device management system, the management module manages devices to which the habitual behavior is applied to automatically reproduce the habitual behavior.

## Description

### TECHNICAL FIELD

The disclosure relates to device management techniques, an in particular to a device management system and method.

### BACKGROUD

With rapid development of mobile communication techniques, a mobile communication terminal becomes a necessary electronic product in people's daily life. A mobile terminal such as a mobile phone at present enables an input through a touch screen while it enables an input through a keyboard in the early age, which represents a process for the mobile communication terminal to become perfect.

Nowadays, people pursue diversified and convenient lives, and they have higher requirements on functionalities of the mobile terminal such as a mobile phone, it is obvious that making a call and surfing the Internet by using a mobile terminal no longer meet users' demand on functions of the mobile terminal. Rather, users expect his/her common operations to be recorded through the system of the mobile terminal without any manual intervention, that is to say, automatic reproduction of desired common operations can be implemented. For example, a user often goes to sleep at 11: 00 pm and before that he/she needs to perform common operations on a mobile phone such as setting the mobile phone to a mute mode, enabling an incoming call screening function and setting an alarm on the mobile phone. These common operations are currently performed manually by the user on a daily basis, which is cumbersome. Therefore, the user expects the mobile phone to have a function that can automatically reproduce these common operations right before 11: 00 pm everyday through recording and storing the common operations.

### SUMMARY

In view of the above, the embodiment of the disclosure is intended to provide a device management system and method, which enables a mobile terminal to record and reproduce frequently performed operations of a user.

To this end, the technical solutions of embodiments of the disclosure are implemented as follows.

The embodiment of the disclosure provides a device management system, which includes an information acquisition module, a core processing module and a management module, specifically, the information acquisition module is configured to detect in real time one or more operations of a user, generate, according to the detected operation(s) of the user, one or more pieces of operation information of the user, and transmit the operation information of the user to the core processing module; the core processing module is configured to receive the operation information of the user from the information acquisition module, process each piece of the received operation information of the user as a habitual behavior of the user and save the habitual behavior; and the management module is configured to manage devices to which the habitual behaviors of the user are applied respectively to automatically reproduce the habitual behavior.

In an embodiment, the information acquisition module may be further configured to, upon detection of an operation of the user on a mobile terminal, record an operation content, time when the operation is performed, a location where the operation is performed and an device on which the operation is performed, and form the operation information of the user based on all of the recorded information.

In an embodiment, the management module may be further configured to disable automatic reproduction of the habitual behavior, change time when the habitual behavior is to be reproduced and a location where the habitual behavior is to be reproduced, and establish a user account including a user data table S and a user device table L.

In an embodiment, the management module may include a mode selection module configured to select an automatic reproduction mode or a personal customization mode of the habitual behavior of the user.

In an embodiment, the information acquisition module may be further configured to provide the management module with a range of the devices to which the habitual behaviors of the user are applied; and the management module may be further configured to change the range of the devices to which the habitual behavior of the user are applied.

The embodiment of the disclosure further provides a device management method, which includes: one or more operations of a user are detected in real time, and one or more pieces of operation information of the user are generated according to the detected operation(s) of the user; each piece of the operation information of the user is processed as a habitual behavior of the user and the habitual behavior is saved; and devices to which the habitual behaviors of the user are applied respectively are managed to automatically reproduce the habitual behavior.

In an embodiment, the step that each piece of the operation information of the user is processed as a habitual behavior of the user may include: the operation(s) of the user, described by one or more pieces of the operation information of the user, are divided into small models, and small models adjacent to each other temporally and spatially are combined to a big model representing the habitual behavior of the user.

In an embodiment, the step that the operation(s) of the user, described by one or more pieces of the operation information of the user, are divided into small models may include: a small model Mᵢ is established, a first three dimensional (3D) point (X₁, Y₁, T₁) is attributed to the small model Mᵢ, and the first 3D point (X₁, Y₁, T₁) is taken as a calculated central point (X_{Mi}, Y_{Mi}, T_{Mi}) of the small model Mᵢ; a distance between a second 3D point (X₂, Y₂, T₂) and the calculated central point (X_{Mi}, Y_{Mi}, T_{Mi}) of the small model Mᵢ is calculated, when the distance is less than a value Inter, then the second 3D point is attributed to the small model Mᵢ; when the distance is larger than or equal to the value Inter, then a small model Mⱼ is established, the second 3D point (X₂, Y₂, T₂) is attributed to the small model Mⱼ, and the second 3D point (X₂, Y₂, T₂) is taken as a calculated central point (X_{Mj}, Y_{Mj}, T_{Mj}) of the small model Mⱼ; and the above step is repeated, when a distance between a new 3D point (Xₖ, Yₖ, Tₖ) and a calculated central point of one of existing small models is less than the value Inter, then the new 3D point (Xₖ, Yₖ, Tₖ) is attributed to said small model; when all of distances between the new 3D point (Xₖ, Yₖ, Tₖ) and each of the existing small models are no less than the value Inter, then a new small model is established, the new 3D point (Xₖ, Yₖ, Tₖ) is attributed to the new small model, and the new 3D point (Xₖ, Yₖ, Tₖ) is taken as a calculated central point of the new small model.

In an embodiment, the method may further include: a value of the calculated central point of any small model is optimized.

In an embodiment, the step that small models adjacent to each other temporally and spatially are combined to a big model representing the habitual behavior of the user may include: when a distance DM between calculated central points of two small models is less than a value KInter, the two small models are combined to a big model Mkn; when the distance DM is greater than or equal to the value KInter, the two small models are taken as two big models.

In the device management system and method provided by the embodiments of the disclosure, operation information of the user is parsed and concluded as small models, then the small models are combined to a big model representing a habitual behavior of the user; the habitual behavior is an common operation of the user; and the mobile terminal can automatically perform the common operation when desired. In this way, the user does not need to set common operations manually; instead, management of a mobile terminal by the user can be implemented by automatic reproduction of stored common operations, through the mobile terminal, using the device management system and method according to the embodiments of the disclosure; such an intelligent management of functions of the mobile terminal not only reflects personalization and intellectualization of the mobile terminal, but also overcomes disadvantages of manual execution, thereby simplifying operations of the user, facilitating user's daily life and saving user's time.

### BRIEF DESCRIPTION OF THE DRAWINGS

Fig, 1 is a schematic structural diagram of a device management system according to an embodiment of the disclosure;
Fig. 2 is a flow chart of a device management method according to an embodiment of the disclosure;
Fig. 3 is a detailed flow chart of the device management method according to an embodiment of the disclosure; and
Fig. 4 is a flow chart of a device management system operating in a personal customization mode according to an embodiment of the disclosure.

### DETAILED DESCRIPTION

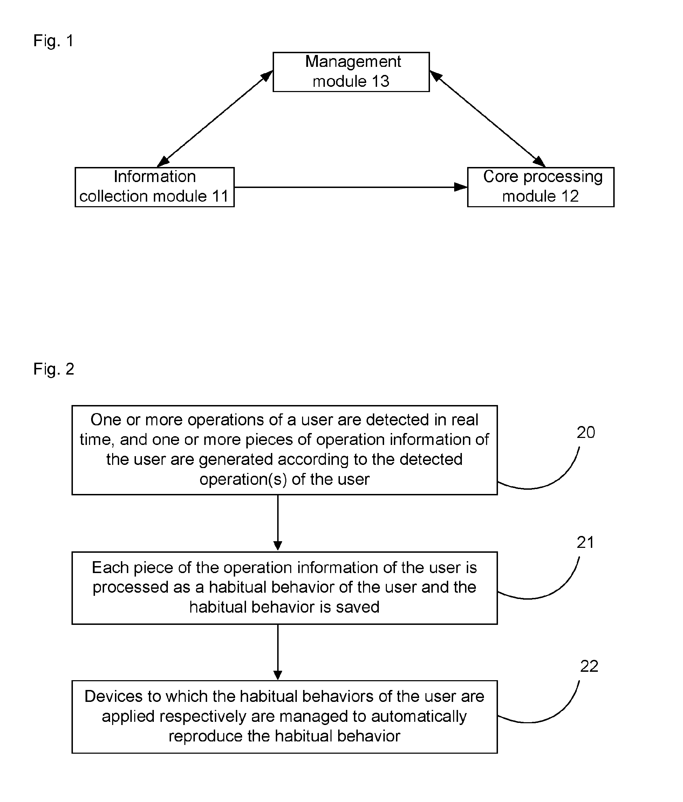

As shown in Fig. 1, a device management system according to an embodiment of the disclosure includes an information acquisition module 11, a core processing module 12 and a management module 13.

Specifically, the information acquisition module 11 is configured to detect in real time one or more operations of a user, generate, according to the detected operation(s) of the user, one or more pieces of operation information of the user, and transmit the operation information of the user to the core processing module 12;
the core processing module 12 is configured to receive the operation information of the user from the information acquisition module 11, process each piece of the received operation information of the user as a habitual behavior of the user and save the habitual behavior; and
the management module 13 is configured to manage devices to which the habitual behaviors of the user are applied respectively to automatically reproduce the habitual behavior.

The management module 13 may be further configured to disable automatic reproduction of the habitual behavior and change time when the habitual behavior is to be reproduced and a location where the habitual behavior is to be reproduced.

Preferably, the information acquisition module 11 may be further configured to, upon detection of an operation of the user on a mobile terminal, record an operation content, time when the operation is performed, a location where the operation is performed and an device on which the operation is performed, and form the operation information of the user based on all of the recorded information.

Accordingly, the core processing module 12 receives the operation information of the user and processes each piece of the received operation information of the user as a habitual behavior of the user. Specifically, the processing each piece of the received operation information of the user as a habitual behavior of the user may include:
firstly, during a time cycle ITIME, the core processing module 12 equalizes each operation of the user, which is performed during the time cycle ITIME, to a three-dimensional (3D) point (Xₖ, Yₖ, Tₖ), and attributes the equalized 3D point representing each operation of the user to a small model Mᵢ;
where the time cycle ITIME can be measured in days, hours, months or years, and the user can set the time cycle ITIME accordingly as desired.

The first 3D point (X₁, Y₁, T₁) attributed to the small model Mᵢ will be taken as the calculated central point (X_{Mi}, Y_{Mi}, T_{Mi}) of the small Mᵢ; wherein Xₖ and Yₖ represent location information and Tₖ represents a time point within the time cycle ITIME.

For the second 3D point (X₂, Y₂, T₂) attributed to the small model Mᵢ, firstly a distance between the second 3D point (X₂, Y₂, T₂) and the calculated central point (X_{Mi}, Y_{Mi}, T_{Mi}) of the small model Mᵢ is calculated; when the distance is larger than or equal to the value of Inter, then another small model Mⱼ is established, the second 3D point (X₂, Y₂, T₂) is attributed to the small model Mⱼ, and the second 3D point (X₂, Y₂, T₂) is taken as a calculated central point (X_{Mj}, Y_{Mj}, T_{Mj}) of the small model Mⱼ; and
the above step is repeated; when a distance between a new 3D point (Xₖ, Yₖ, Tₖ) and a calculated central point of one of existing small models is less than the value of Inter, then the new 3D point (Xₖ, Yₖ, Tₖ) is attributed to said small model; when all of distances between the new 3D point (Xₖ, Yₖ, Tₖ) and each of the existing small models are no less than the value of Inter, then a new small model is established, the new 3D point (Xₖ, Yₖ, Tₖ) is attributed to the new small model, and the new 3D point (Xₖ, Yₖ, Tₖ) is taken as a calculated central point of the new small model. In this way, each of the 3D points representing an operation of the user, within the time cycle ITIME, is attributed to a respective one of the small models M₁, M₂...Mₙ.

Next, small models which appears within the time cycle ITIME with a probability lower than probability P are deleted, wherein the probability P is set according to the user's preference, and the probability P is typically larger than or equal to 0.5. In this way, after being screened by the probability, the small models become M₁, M₂...Mₘ (m≤n);
here, when a time error with respect to time when a same daily operation is performed is set to 1 minute and a spatial error is set to 10 meters, then a value of the Inter is estimated to be 14 according to the Pythagorean theorem by taking 6 seconds as a time unit and 1 meter as a spatial unit; when the time error is set to 30 minutes and the spatial error is set to 1000 meters, then the value of the Inter is 1045; thus a normal range of the value of the Inter is between 14 and 1045. A smaller value of the Inter indicates a stricter screening, and more accurate small models will be formed.

The user can set, as desired, the value of the Inter and the time cycle ITIME with the management module 13.

However, when a distance DM between calculated central points of two small models is less than a value KInter, the two small models can be combined to a big model Mₖₙ; when the distance DM is greater than or equal to the value KInter, the two small models can be taken directly as two big models;
here, the small models represent single behaviors performed by the user during certain time periods and at certain locations, each of the combined big models Mₖ₁, Mₖ₂...Mₖₙ represents a set of behaviors performed by the user during a same time period or adjacent time periods at a same location or adjacent locations, and the set of behaviors are namely habitual behaviors; thus the big models Mₖ₁, Mₖ₂... Mₖₙ represent habitual behaviors of the user.

Here, when a time error with respect to the combination of small models to a big model is set to 1 minute and a spatial error is set to 10 meters, then a value of the KInter is estimated to be 14 according to the Pythagorean theorem by taking 6 seconds as a time unit and 1 meter as a spatial unit; when the time error is set to 30 minutes and the spatial error is set to 1000 meters, then the value of the KInter is 1045; thus a normal range of the value of the KInter is between 14 and 1045. A smaller value of the KInter indicates a more accurate big model formed therefrom.

In the above technical solutions, the first 3D point entering the small model Mₖ is taken directly as the calculated central point, this results in an inaccurate division of the small models, and thus it is desired to optimize the calculated central point.

When there is a 3D point (X', Y', T') in the small model Mₖ, the sum of distances between the 3D point (X', Y', T') and each of all other 3D points in the small model Mₖ is calculated; then a value (X_{Mk}', Y_{Mk}', T_{Mk}') of the 3D point (X', Y', T') for which the sum of distances takes a minimum is obtained, and the value (X_{Mk}', Y_{Mk}', T_{Mk}') is namely a new calculated central point of the small model Mₖ.

When more than one operations of the user are described in the small model Mₖ, further optimization needs to be performed, for example, by the following method: calculating distances between each of all 3D points in the small model Mₖ and the new calculated central point (X_{Mk}', Y_{Mk}', TMₖ') of the same small model, deleting 3D points corresponding to greater values of the distances and retaining 3D points corresponding to smaller values of the distances, so that the operations of the user, which are attributed to the same small model Mₖ tend to be a same operation.

The management module 13 is further configured to establish a user account including a user data table S and a user device table L.

The user data table S records information such as locations where habitual behaviors are performed and times when the habitual behaviors are performed; the user device table L collects a range of devices to which the habitual behaviors are applied, i.e., which devices can respond to the habitual behaviors.

The information acquisition module 11 is further configured to provide the management module 13 with a range of the devices to which the habitual behaviors of the user are applied; and
accordingly, the management module 13 may be configured to change, as desired by the user, the range of the devices to which the habitual behavior of the user are applied.

The management module 13 further includes a mode selection module configured to select an automatic reproduction mode or a personal customization mode of the habitual behavior of the user.

Based on the above device management system, the embodiment of the disclosure further provides a device management method, as shown in Fig. 2. the method includes:
Step 20, one or more operations of a user are detected in real time, and one or more pieces of operation information of the user are generated according to the detected operation(s) of the user.

Here, after the real time detection of one or more operations of the user, the step further includes: information such as time when the operation of the user is performed and a location where the operation of the user is performed are recorded to form one or more pieces of operation information of the user.

Step 21, each piece of the operation information of the user is processed as a habitual behavior of the user and the habitual behavior is saved.

Here, specifically, the step that each piece of the operation information of the user is processed as a habitual behavior of the user includes: based on time when operation(s) of the user are performed and locations where the operation(s) are performed, the operation(s) of the user, described by one or more pieces of the operation information of the user, are divided into small models, and then small models adjacent to each other temporally and spatially are combined to a big model representing the habitual behavior of the user, and finally several big models are integrated into to a habitual behavior of the user and the habitual behavior is saved.

Step 22, devices to which the habitual behaviors of the user are applied respectively are managed to automatically reproduce the habitual behavior.

Specifically, when a current time and location match time when a habitual behavior is performed and a location where the habitual behavior is performed, the device to which the habitual behavior of the user is applied automatically reproduces the habitual behavior.

When the habitual behavior is saved, it is desired to establish a user account including a user data table S and a user device table L.

The user data table S records information such as locations where habitual behaviors are performed and times when the habitual behaviors are performed; the user device table L collects a range of devices to which the habitual behaviors are applied, i.e., devices which can respond to the habitual behaviors.

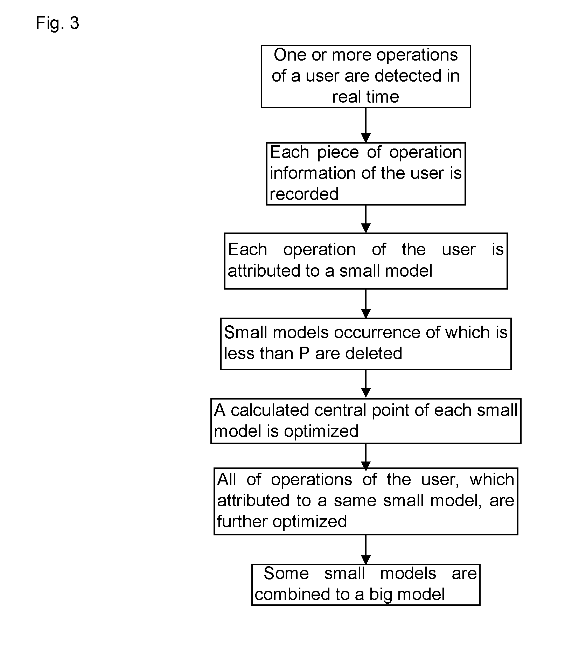

As shown in Fig. 3, the device management method provided by the disclosure will be further elaborated in connection with the device management system according to the embodiment of the disclosure.

An information collection module 11 detects in real time one or more operations of a user, records an operation content, time when the operation is performed, a location where the operation is performed and an device on which the operation is performed, forms operation information of the user based on all of the recorded information, and transmits the operation information of the user to a core processing module 12; and

The core processing module 12 equalizes information regarding time when the operation of the user is performed and a location where the operation is performed as a 3D point (X, Y, T) in space; wherein X, Y represent information regarding a location and T represents a time point within the time cycle ITIME, which is set by the user and measured in hours, days, months or years; here the time cycle ITIME is set to be measured in days.

Then, within the time cycle ITIME, locations where all of operations of the user are performed and times when all of the operations of the user are performed can be represented respectively by 3D points (X₁, Y₁,T₁), (X₂, Y₂, T₂), (X₃,Y₃,T₃)...; when a distance between two 3D points is less than the value of Inter, then it can be considered that relevant operations of the user are attributed to a same small model.

Specifically, when a time error with respect to time when a same daily operation is performed is set to 1 minute and a spatial error is set to 10 meters, then a value of the Inter is estimated to be 14 according to the Pythagorean theorem by taking 6 seconds as a time unit and 1 meter as a spatial unit; when the time error is set to 30 minutes and the spatial error is set to 1000 meters, then the value of the Inter is 1045; thus a normal range of the value of the Inter is between 14 and 1045. A smaller value of the Inter indicates a stricter screening, and more accurate small models will be formed.

The value of Inter can be set according to usage of a device to which an operation of the user is applied. For example, when the user uses the device regularly, for example, the user sets an alarm at 11: 00 pm on a daily basis, then the value of Inter can be set to a smaller value for example between 60 and 2100.

Specifically, the step that the operation(s) of the user, described by one or more pieces of the operation information of the user, are divided into small models may include:
firstly, a small model Mᵢ is established, a first three dimensional (3D) point (X₁, Y₁, T₁) is attributed to the small model Mᵢ, and the first 3D point (X₁, Y₁, T₁) is taken as a calculated central point (X_{M1}, Y_{M1}, T_{M1}) of the small model M₁;
a distance between a second 3D point (X₂, Y₂, T₂) and the calculated central point (X_{M1}, Y_{M1}, T_{M1}) of the small model M₁ is calculated; when the distance is less than the value of Inter, then the second 3D point is attributed to the small model M₁; when the distance is larger than or equal to the value of Inter, then a small model M₂ is established, the second 3D point (X₂, Y₂, T₂) is attributed to the small model M₂, and the second 3D point (X₂, Y₂, T₂) is taken as a calculated central point (X_{M2}, Y_{M2}, T_{M2}) of the small model M₂; and
then, when a distance between a third 3D point (X₃, Y₃, T₃) and the calculated central point (X_{M1}, Y_{M1}, T_{M1}) of the small model M₁ is less than the value Inter, then the third 3D point (X₃, Y₃, T₃) is attributed to the small model M₁; when a distance between the third 3D point (X₃, Y₃, T₃) and the calculated central point (X_{M2}, Y_{M2}, T_{M2}) of the small model M₂ is less than the value Inter, then the third 3D point (X₃, Y₃, T₃) is attributed to the small model M₂; when the distance between the third 3D point (X₃, Y₃, T₃) and the calculated central point (X_{M1}, Y_{M1}, T_{M1}) of the small model M₁ is no less than the value Inter and the distance between the third 3D point (X₃, Y₃, T₃) and the calculated central point (X_{M2}, Y_{M2}, T_{M2}) of the small model M₂ is no less than the value Inter, then a small model M₃ is established, the third 3D point (X₃, Y₃, T₃) is attributed to the small model M₃ and taken as a calculated central point (X_{M3}, Y_{M3}, T_{M3}) of the small model M₃;
the above steps are repeated until all of 3D points representing the operations of the user, within the time cycle ITIME, are attributed respectively to corresponding small models M₁, M₂...Mₙ.

Next, it is determined in sequence whether the probability that each of the small models M₁, M₂...Mₙ appears within the time cycle ITIME is less than the probability P, when the probability that the small model Mₖ appears within the time cycle ITIME is less than the probability P, then it is considered that an operation of the user, which is attributed to the small model Mₖ, is not a common operation of the user, and thus the small model Mₖ can be deleted; when the probability that the small model Mₖ appears within the time cycle ITIME is larger than or equal to the probability P, then it is considered that the operation of the user, which is attributed to the small model Mₖ, is a common operation of the user, and thus the small model Mₖ is retained.

In an embodiment, the probability P may be set according to the user's preference, and the probability P is typically larger than or equal to 0.5.

After being screened with respect to the probability, the small models are M₁, M₂...Mₘ, (m≤n), wherein the fineness of the division of small models is determined by both the value of the Inter and the time cycle ITIME, the user can set, by herself/himself, the value of the Inter and the time cycle ITIME with the management module 13, and a user who performs regular operations on the mobile terminal such as a mobile phone can set smaller values for the Inter and the time cycle ITIME.

In the above technical solution, a 3D point first attributed to a small model Mₖ is selected as a calculated central point (X_{Mk}, Y_{Mk}, T_{Mk}) of the small mode Mₖ, and thus it is likely to encounter cases that 3D points having very high cohesion are attributed to different small models and those having very low cohesion are attributed to a same small model, thus resulting in negative effect on the division of small models.

In order to avoid above cases, after all of 3D points representing an operation of the user, within the time cycle ITIME, are attributed to small models M₁, M₂...Mₙ, the calculated central point (X_{Mk}, Y_{Mk}, T_{Mk}) of the small model Mₖ can be further optimized.

When there is a 3D point (X', Y', T') in the small model Mₖ, the sum of distances between the 3D point (X', Y', T') and each of all other 3D points in the small model Mₖ is calculated; then a value (X_{Mk}', Y_{Mk}', T_{Mk}') of the 3D point (X', Y', T') for which the sum of distances takes a minimum is obtained, and the value (X_{Mk}', Y_{Mk}', T_{Mk}') is namely a new calculated central point of the small model Mₖ.

Values of calculated central points of the small models are re-calculated according to the above method. In this way, cohesion among 3D points included in a same small model is improved.

When more than one operations of the user are included in the small model Mₖ, further optimization needs to be performed, for example, by the following method: calculating distances between each of all 3D points in the small model Mₖ and the new calculated central point (X_{Mk}', Y_{Mk}', T_{Mk}') of the same small model, deleting 3D points corresponding to greater values of the distances and retaining 3D points corresponding to smaller values of the distances so that the operations of the user, which are attributed to the same small model Mₖ tend to be a same operation.

After all of the operations of the user are divided to corresponding small models, the small models M₁, M₂...Mₘ are combined to big models Mₖ₁, Mₖ₂...Mₖₙ. Since each small model Mₖ can be represented by its calculated central point (X_{Mk},Y_{Mk},T_{Mk}), it is possible to determine, according to a distance between calculated central points of each two small models, whether the two models should be combined to one big model. When the distance DM is less than a value KInter, it is considered that the two small models have high cohesion, and can be combined to a big model Mₖₙ; when the distance DM is greater than or equal to the value KInter, the two small models can be taken directly as two big models.

Here, when a time error with respect to the combination of small models to a big model is set to 1 minute and a spatial error is set to 10 meters, then a value of the KInter is estimated to be 14 according to the Pythagorean theorem by taking 6 seconds as a time unit and 1 meter as a spatial unit; when the time error is set to 30 minutes and the spatial error is set to 1000 meters, then the value of the KInter is 1045; thus a normal range of the value of the KInter is between 14 and 1045. A smaller value of the KInter indicates a more accurate big model formed therefrom.

After combination, the resulting big models are ,Mₖ₁, Mₖ₂...Mₖₙ. Since operations within a same big model are performed at adjacent time and locations, the big models Mₖ₁, Mₖ₂...Mₖₙ can be directly taken as habitual behaviors of the user, which can be regarded as common operations of the user.

In a time cycle, at least one habitual behavior can be generated; in practical life, when a current location and time match the location and time (X_{Mkn}, Y_{Mkn}, T_{Mkn}) described by the habitual behavior Mₖₙ, the management module 13 manages a device to which the habitual behavior of the user is applied (such as an alarm) to automatically reproduce the operation.

In an embodiment, the management module 13 may be further configured to establish a user account including a user data table S and a user device table L.

The user data table S records information such as locations where habitual behaviors are performed and times when the habitual behaviors are performed; the user device table L collects a range of devices to which the habitual behaviors are applied, i.e., which devices can respond to the habitual behaviors.

In the above technical solutions, it has already been described that the mode selection module has an automatic reproduction mode or a personal customization mode of the habitual behavior of the user, and the automatic reproduction mode can be implemented by the above technical solutions.

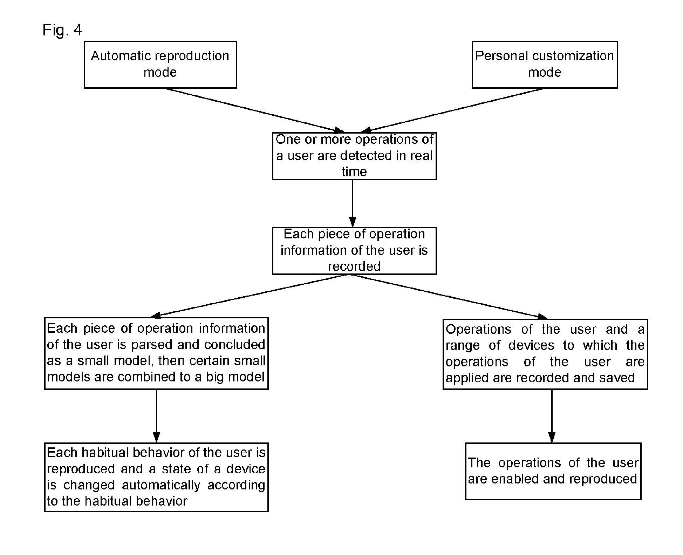

The personal customization mode is shown in Fig. 4. When the user selects the personal customization mode, the information collection module 11 collects all operations of the user, forms operation information of the user, and transmits the formed operation information of the user to the core processing module 12 which will record and save the operation information of the user; the user may, as desired, trigger the personal customization mode with the management module 13 so that all of the operations of the user, which included in the operation information of the user, are reproduced sequentially, thus multiple operations of the user can be implemented through one key.

When selection of the personal customization mode is made later on, a key-in through one key can trigger habitual behaviors stored in the core processing module 12, and then the habitual behaviors are reproduced through devices to which the habitual behavior were previously applied.

The above solutions indicate that when a current time and location match time when a habitual behavior is performed and a location where the habitual behavior is performed, the device management system automatically reproduces one or more common operations corresponding to the habitual behavior; and it is certainly possible that the device management system may also change automatically, based on different habitual behaviors, states of devices to which the habitual behaviors are applied.

Regardless of whether the user selects the automatic reproduction mode or the personal customization mode, the user device table L can be an original user device table provided by a service provider of the mobile terminal, or a table defined by the user, which is a table modified from the original user device table, or a blank table.

With continuous development of communication techniques, the system of the mobile terminal will have functions such as remote control of external electrical devices such as air conditioners, water heaters, rice cookers and the like. By means of the technical solution, the core processing module 12 may further record and store a location where the mobile phone performs remote control of external electrical devices such as air conditioners and water heaters and a time when the mobile phone does so; when a current location and time match the information for the user to operate the external electrical devices, which is stored in the core processing module 12, then the device management system automatically turns on corresponding air conditioners and water heaters, thereby facilitating people's daily life.

By means of the device management system and method according to the embodiments of the disclosure, one or more operations of a user on a mobile terminal are detected in real time, information such as a time when the operation is performed and a location where the operation is performed is recorded, operation information of the user is formed based on all of the recorded information, the operation information of the user is parsed and then concluded as small models, then certain small models are combined to a big model representing a habitual behavior of the user; the habitual behavior is namely an common operation of the user; and the mobile terminal can automatically perform the common operation when desired. In this way, the user does not need to set common operations manually, instead, management of a mobile terminal by the user can be implemented by automatic reproduction of stored common operations through the mobile terminal, using the device management system and method according to the embodiments of the disclosure; such an intelligent management of functions of the mobile terminal not only reflects personalization and intellectualization of the mobile terminal, but also overcomes disadvantages of manual execution, thereby simplifying operations of the user, facilitating user's daily life and saving user's time.

What are described are merely preferable embodiments of the disclosure, and are not intended to limit the disclosure.

## Claims

1. An device management system, comprising an information acquisition module, a core processing module and a management module,
wherein the information acquisition module is configured to detect in real time one or more operations of a user, generate, according to the detected operation(s) of the user, one or more pieces of operation information of the user, and transmit the operation information of the user to the core processing module;
wherein the core processing module is configured to receive the operation information of the user from the information acquisition module, process each piece of the received operation information of the user as a habitual behavior of the user and save the habitual behavior; and
wherein the management module is configured to manage devices to which the habitual behaviors of the user are applied respectively to automatically reproduce the habitual behavior.

2. The device management system according to claim 1, wherein the information acquisition module is further configured to, upon detection of an operation of the user on a mobile terminal, record an operation content, time when the operation is performed, a location where the operation is performed and an device on which the operation is performed, and form the operation information of the user based on all of the recorded information.

3. The device management system according to claims 1 or 2, wherein the management module is further configured to disable automatic reproduction of the habitual behavior, change time when the habitual behavior is to be reproduced and a location where the habitual behavior is to be reproduced, and establish a user account including a user data table S and a user device table L.

4. The device management system according to claims 1 or 2, wherein the management module comprises a mode selection module configured to select an automatic reproduction mode or a personal customization mode of the habitual behavior of the user.

5. The device management system according to claim 1, wherein the information acquisition module is further configured to provide the management module with a range of the devices to which the habitual behaviors of the user are applied; and
wherein the management module is further configured to change the range of the devices to which the habitual behavior of the user are applied.

6. A device management method, comprising:
detecting in real time one or more operations of a user, and generating, according to the detected operation(s) of the user, one or more pieces of operation information of the user;
processing each piece of the operation information of the user as a habitual behavior of the user and saving the habitual behavior; and
managing devices to which the habitual behaviors of the user are applied respectively to automatically reproduce the habitual behavior.

7. The device management method according to claim 6, wherein the processing each piece of the operation information of the user as a habitual behavior of the user comprises:
dividing the operation(s) of the user, described by one or more pieces of the operation information of the user, into small models, and combining small models adjacent to each other temporally and spatially to a big model representing the habitual behavior of the user.

8. The device management method according to claim 7, wherein the dividing the operation(s) of the user, described by one or more pieces of the operation information of the user, into small models comprises:
establishing a small model Mᵢ, attributing a first three dimensional (3D) point (X₁, Y₁, T₁) to the small model Mᵢ, and taking the first 3D point (X₁, Y₁, T₁) as a calculated central point (X_{Mi}, Y_{Mi}, T_{Mi}) of the small model Mᵢ;
calculating a distance between a second 3D point (X₂, Y₂, T₂) and the calculated central point (X_{Mi}, Y_{Mi}, T_{Mi}) of the small model Mᵢ, when the distance is less than a value Inter, then attributing the second 3D point to the small model Mᵢ; when the distance is larger than or equal to the value Inter, then establishing a small model Mⱼ, attributing the second 3D point (X₂, Y₂, T₂) to the small model Mⱼ, and taking the second 3D point (X₂, Y₂, T₂) as a calculated central point (X_{Mj}, Y_{Mj}, T_{Mj}) of the small model Mⱼ; and
repeating the above step, when a distance between a new 3D point (Xₖ, Yₖ, Tₖ) and a calculated central point of one of existing small models is less than the value Inter, then attributing the new 3D point (Xₖ, Yₖ, Tₖ) to said small model; when all of distances between the new 3D point (Xₖ, Yₖ, Tₖ) and each of the existing small models are no less than the value Inter, then establishing a new small model, attributing the new 3D point (Xₖ, Yₖ, Tₖ) to the new small model, and taking the new 3D point (Xₖ, Yₖ, Tₖ) as a calculated central point of the new small model.

9. The device management method according to claim 8, further comprising:
optimizing a value of the calculated central point of any small model.

10. The device management method according to claims 8 or 9, wherein the combining small models adjacent to each other temporally and spatially to a big model representing the habitual behavior of the user comprises:
when a distance DM between calculated central points of two small models is less than a value KInter, combining the two small models to a big model Mkn; when the distance DM is greater than or equal to the value KInter, taking the two small models as two big models.
